# EUROPEAN PATENT SPECIFICATION

(11) **EP 2 463 557 B1**
(45) Date of publication and mention of the grant of the patent: **16.03.2016**
(21) Application number: 11178960.8
(22) Date of filing: 26.08.2011
(51) Int. Cl.: F16H 63/38, F16H 3/22, F16H 3/26, F16H 3/28, F16H 3/32

(54) **Sequential gearbox**
Sequentielles Getriebe
Boîte de vitesses séquentielle

(30) Priority: 10.12.2010 IT MI20102267
(43) Date of publication of application: 13.06.2012
(73) Proprietor: Bi.Ci.Di. S.r.l, 20078 S. Colombano al Lambro MI (IT)
(72) Inventor: Cibien, Angelo, I-20078 San Colombano al Lambro (MI) (IT)
(74) Representative: Belloni, Giancarlo

(56) References cited:
- GB-A- 1 164 713
- JP-U- 57 156 927
- US-A- 2 357 781
- US-A- 4 508 190
- US-A- 4 651 848
- US-A- 4 783 915

## Description

The present invention relates a speed gearbox and in particular relates to a sequential gearbox suitable for installation on small working machines. The most typical area where this type of gearbox is used is that of horticultural and gardening machines, such as lawnmowers, rotary tillers or walking tractors. This type of gearbox may however also be validly used in adjacent areas, for example on mini-dumpers, small turbine snow blowers, or the like. For greater simplicity the following description refers specifically - purely by way of example - to a rotary tiller, but the person skilled in the art will not have any difficulty in extending the scope thereof to the other machines on which it may be used.

The gearbox is a mechanical system which is widely known per se. In its most basic features a gearbox comprises an input shaft, connected to an engine, and an output shaft, connected to the mechanical means which must be driven, referred to below as user appliances, for example drive wheels, mowing blades, tines for cultivating the ground, turbines for removing the snow, etc.

In a manner known per se the gearbox also comprises a control device which is movable among a plurality of positions and which allows the operator to select different transmission ratios between the input shaft and the output shaft. In other words, for each active position of the control device there is a corresponding ratio between the angular speed *ωₘ* imparted by the engine to the input shaft and the angular speed *ω_{1A}* imparted by the gearbox to the output shaft. Obviously, the torque *Cₘ* imparted by the engine to the input shaft and the torque *C_{1A}* imparted by the gearbox to the output shaft will have an inverse ratio in relation to that defined for the respective speeds. In fact the input power must be the same as the output power, except for any inevitable losses due to friction, which may be ignored for the purposes of the present document.

The control device may advantageously have one or more inactive positions, where the input shaft is mechanically disconnected from the output shaft. In these positions, which are called neutral or idle positions, neither the speed nor the torque is therefore transmitted to the output shaft.

Also known are gearboxes of the sequential type where the control device may be moved from one position to another position situated immediately adjacent thereto. In other words, in a sequential gearbox, the control device may not be moved arbitrarily from any one position to any other position.

These gearboxes which are commonly installed on small working machines, although widely used, are not without defects.

The gearboxes of the known type are often somewhat bulky, in particular considering the overall dimensions which are typical of the machines for which they are intended. Moreover, the gearboxes of the known type are designed such as to require periodic topping up with oil and/or oil changes. These routine maintenance operations are particularly inconvenient, both for the non-professional user, who does not always have the appropriate facilities and/or skills to carry out these operations correctly, and for the professional user, who is necessarily subject to undesirable machine downtime.

Finally, each of the gearboxes of the known type is designed in a completely autonomous manner, without any attempt to exploit the advantages associated with the design of an entire family of gearboxes, said advantages typically arising during the production, assembly and logistic stages. In other words, if we consider purely by way of example a 2-speed gearbox and a 3-speed gearbox, both offered by the same manufacturer in the same catalogue, the 2-speed gearbox typically has nothing in common with the 3-speed gearbox. This obviously means that the manufacturer must maintain two production lines which are completely separate and must manage two separate logistic lines for supply of the spare parts. Moreover, the manufacturer of the machine on which the gearboxes may be installed may propose the two different versions only if the machine has two different mounting seats with the respective fixtures.

JP57156927 discloses a gearbox similar to the one set forth in the preamble of claim 1. The object of the present invention is therefore to overcome at least partly the drawbacks mentioned above with reference to the prior art.

In particular, an aim of the present invention is to provide a sequential gearbox which is compact and efficient.

Another aim of the present invention is to provide a sequential gearbox which does not require routine maintenance operations during the course of its working life.

Another aim of the present invention is to provide a family of sequential gearboxes wherein the components, production steps and spare parts are shared as far as possible.

The abovementioned object and aims are achieved by a sequential gearbox according to Claim 1.

The characteristic features and further advantages of the invention will emerge from the description, provided below, of a number of examples of embodiments, provided by way of non-limiting examples, with reference to the accompanying drawings in which:
- Figures 1.a, 1.b and 1.c show schematically side views of three different embodiments of a sequential gearbox forming part of a single family, according to the invention;
- Figure 2 shows a side view of an embodiment of the sequential gearbox according to the invention;
- Figure 3 shows a side view of another embodiment of the sequential gearbox according to the invention;

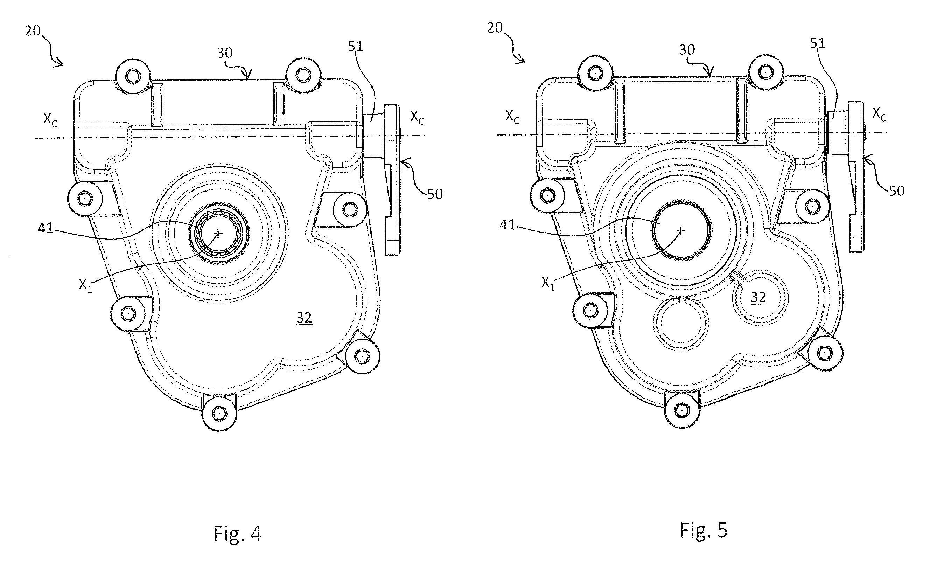

- Figure 4 shows a plan view of the sequential gearbox according to Figure 2;
- Figure 5 shows a plan view of the sequential gearbox according to Figure 3;
- Figure 6 shows a perspective view of the sequential gearbox according to Figure 2.
- Figure 7 shows a perspective view of the sequential gearbox according to Figure 3;
- Figure 8 shows an exploded perspective view of a sequential gearbox according to the invention, in which certain components have been removed for greater clarity;

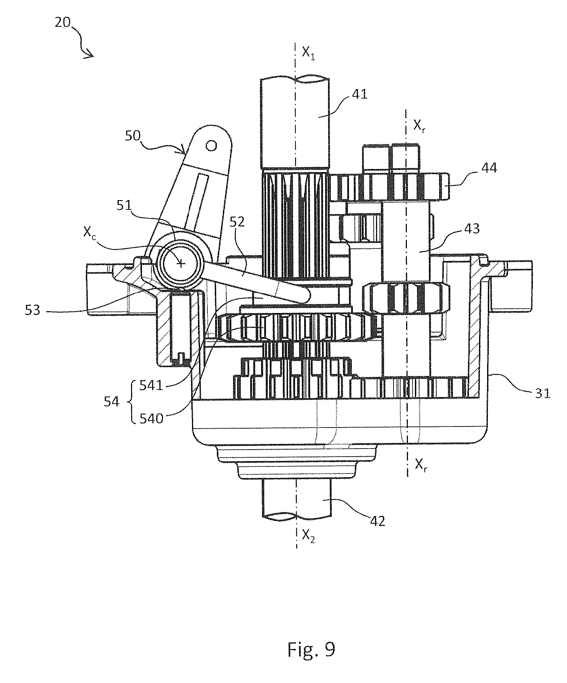

- Figure 9 shows a partially cross-sectioned view of a sequential gearbox according to the invention;
- Figure 10 shows schematically the control device of a sequential gearbox according to the invention;
- Figure 11 shows schematically a cross-sectional view along the line XI-XI of Figure 12; and
- Figure 12 shows schematically a view of part of the cross-section along the line XII-XII of Figure 10.

With reference to the accompanying figures, 20 denotes in its entirety a sequential gearbox according to the invention. The sequential gearbox 20 comprises:
- a housing 30 comprising a case 31 and a cover 32;
- a first shaft 41 rotatable about an axis X₁ and projecting from the housing 30;
- a second shaft 42 rotatable about an axis X₂ parallel to the axis X₁, the second shaft projecting from the housing 30; and
- at least one lay shaft 43 rotatable about an axis Xᵣ parallel to the axis X₁ and the axis X₂, the at least one lay shaft 43 being entirely contained within the housing 30.

One or more gearwheels 44 are keyed onto each of the shafts 41, 42 and 43. One of the first and second shafts 41 or 42 is designed to be connected mechanically to an engine upstream of the gearbox 20, while the other shaft 42 or 41 is designed to be connected mechanically to a user appliance downstream of the gearbox 20. The first shaft 41 and the second shaft 42 may be connected mechanically together by means of the gearwheels 44 and the at least one lay shaft 43, in a plurality of transmission configurations, where each of the transmission configurations defines a different transmission ratio between the first shaft 41 and the second shaft 42.

The sequential gearbox 20 also comprises a control device 50 which is movable among a plurality of consecutive working positions, where each of the working positions of the control device defines a different configuration for transmission between the first shaft 41 and the second shaft 42. The control device in turn comprises:
- a control shaft 51 projecting from the housing 30 and rotatable about an axis X_{c} skew with respect to the axes X₁ and X₂ and perpendicular thereto, the control shaft 51 being able to assume a plurality of successive angular positions corresponding to the working positions of the control device 50;
- a fork member 52 inserted in the control shaft 51 so as to project radially from the axis X_{c} and to be constrained in the circumferential direction relative to the axis X_{c}; and
- a sliding wheel 54 mounted on the first shaft 41 so as to be constrained in the circumferential and radial direction relative to the axis X₁ and so as to be able to slide in an axial direction along the axis X₁ so as to assume a plurality of working positions, the sliding wheel 54 comprising a set of teeth 540 and a groove 541.

In accordance with the invention, the fork member 51 engages with the groove 541 of the sliding wheel 54 so that in each angular position of the control shaft 51 there is a corresponding different position of the sliding wheel 54 along the first shaft 51. Moreover, the gearbox 20 comprises at least two poppet balls 53 mounted so as to be pushed radially against the control shaft 51 and suitable to engage in succession inside a plurality of radial recesses 35 formed in the control shaft 51 and spaced circumferentially from each other. Co-operation of the poppet balls 53 with each of the recesses 35 defines a stable equilibrium position for the control shaft 51.

It should be noted here that, in relation to a generic axis X, the term "axial" is understood as meaning the direction of any straight line parallel to the axis X; the term "radial" is understood as meaning the direction of any half line having its origin on the axis X and perpendicular thereto; the term "circumferential" is understood as meaning the direction of a circumference centred on the axis X and contained within a plane perpendicular thereto. Here and in the description below, owing to the particular structure of the gearbox 20, often reference is made to one or more axes which are different from each other, such as X₁, X₂, X_{c}, etc. Therefore, the concepts "radial", "axial" and "circumferential" are in each case used with reference to only one of these axes. Where not expressly indicated, the reader should refer to the closest context in order to determine correctly the axis to which these expressions refer.

Above reference has been made to the fact that the axis X_{c} is skew and perpendicular relative to the axis X₁ (or X₂). Strictly speaking, this definition is not completely correct from a geometrical point of view. It is however used to indicate, in a synthetic and intuitive manner, that a straight line parallel to the axis X₁ (or X₂) and passing through X_{c} is perpendicular to the latter.

As mentioned above, the gearbox 20 comprises a control device 50 movable, in a manner known per se, among a plurality of working positions consecutive to each other. In other words, the control device 50 is movable in a single direction only and, from each position, may be displaced into only the immediately adjacent working positions. In this sense the sequential gearbox 20 differs from the so-called "H-type" gearboxes where the control device may be theoretically moved from each position into any of the other working positions.

In accordance with the embodiments shown in the Figures, the control shaft 51 projects from the housing 30 at the joint between the case 31 and the cover 32.

In a manner known per se, each of the working positions of the control device 50 defines a different configuration for transmission between the first shaft 41 and the second shaft 42. In the present document, the transmission configurations which may be defined by the single gearbox 20 according to the invention form a set *I*. In particular, the components of the gearbox 20 are arranged so that the sliding wheel 54 may, moving from one to another of its working positions, start or terminate a kinematic connection between the first shaft 41 and the second shaft 42.

Here and below, the working positions considered for the control device 50 and for its components (shaft 51, fork member 52, sliding wheel 54, etc.) are only those which are defined as stable equilibrium positions resulting from co-operation between the at least two poppet balls 53 and the radial seats 35. Obviously, the control device 50 and its components assume, during the transition from an equilibrium position into the other position, an infinity of other intermediate positions. The latter are, however, not considered here since they are not stable equilibrium positions and do not correspond to any specific transmission configuration of the gearbox 20.

The present invention also relates to a family F of gearbox types 20, each of which is in accordance with that described above. In the family F according to the invention, each of the gearbox types 20 allows the definition of a different set *I* of configurations for transmission between the first shaft 41 and the second shaft 42, each of the transmission configurations defining a different transmission ratio. Moreover, in the family F, all the gearboxes 20 comprise the same case 31.

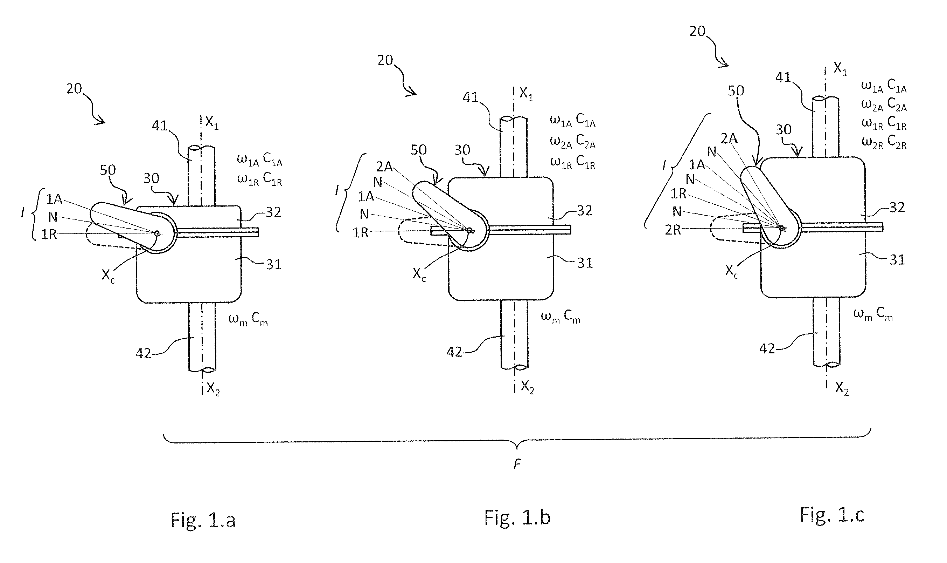

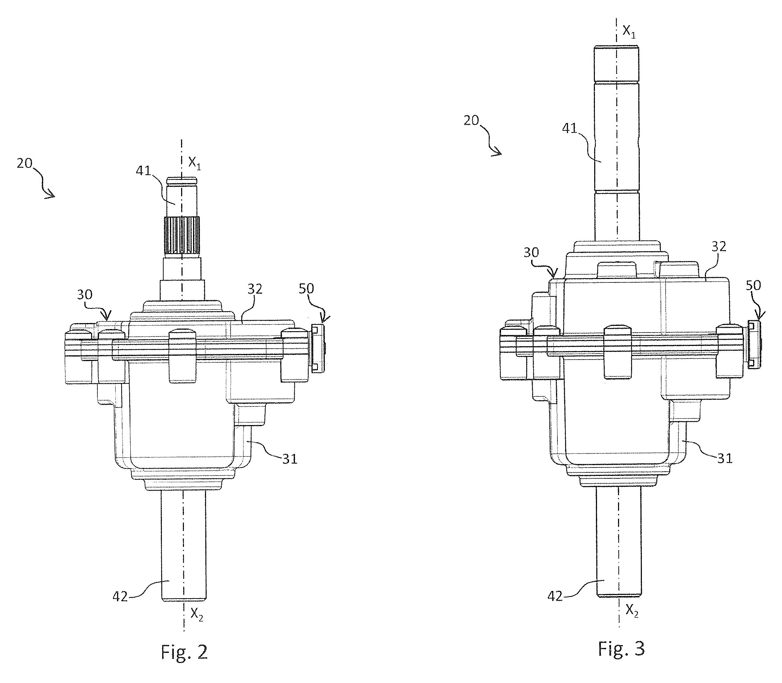

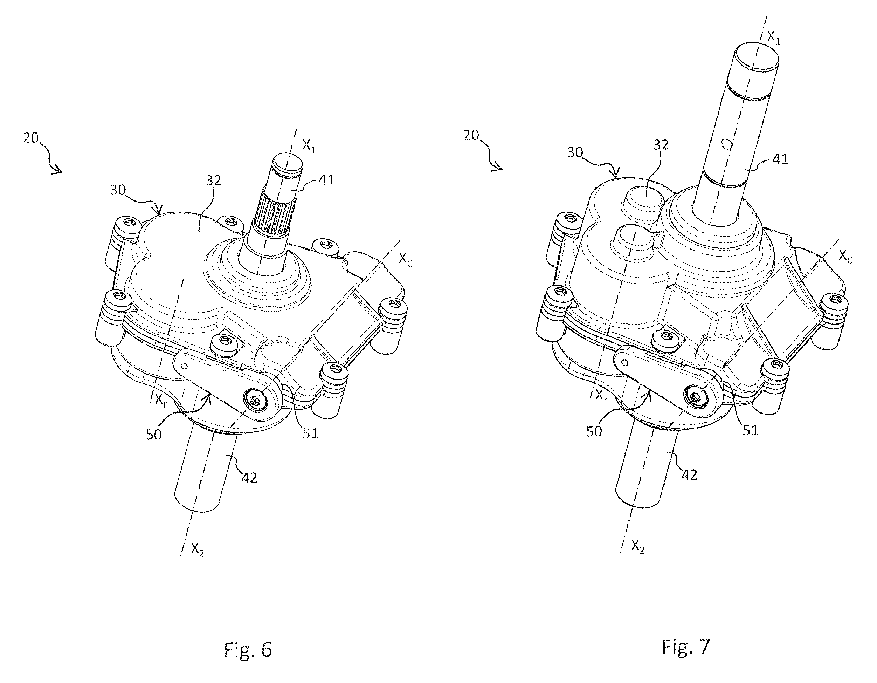

In accordance with certain embodiments of the invention, the individual gearbox types 20 forming part of the same family F differ from each other in terms of the set *I* of transmission configurations and/or of a different cover 32. As a general rule, a greater number of gear ratios will require a greater number of gearwheels 44 inside the housing 30 and therefore a larger-size cover 32. This may be understood in the specific case by comparing with each other the schematic figures 1.a, 1.b and 1.c as well as Figures 2 and 3 and Figures 6 and 7.

Still with reference to the schematic examples shown in Figures 1, Figure 1.a shows a gearbox 20 according to the invention, the control device 50 of which may assume three working positions indicated by 1R (reverse), N (neutral) and 1A (forwards). In accordance with this example, the position 1R (reverse) of the control device 50 corresponds to a transmission configuration which defines a negative transmission ratio, i.e. where the first shaft 41 and the second shaft 42 rotate in the opposite direction to each other. The position 1A (forwards) of the control device 50 corresponds to a transmission device which defines a positive transmission ratio, i.e. where the first shaft 41 and the second shaft 42 rotate in the same direction. Finally, the position N (neutral) of the control device 50 represents the idle condition, namely corresponds to an open transmission configuration where the two shafts rotate independently of each other.

As the person skilled in the art can easily understand, the two transmission configurations corresponding to the working positions 1A and 1R, in addition to defining the direction of rotation of the two shafts, also define an actual transmission ratio ωₘ/ω_{1A}. In other words, when for example the control device is in position 1A, an angular speed ωₘ imparted by the engine to the first shaft 41 produces a corresponding angular speed ω_{1A} imparted to the second shaft 41 by the particular transmission configuration selected in the gearbox 20. Obviously, a torque Cₘ imparted by the engine to the first shaft 41 produces a corresponding torque C_{1A} imparted to the shaft 42 of the gearbox 20. The numerical value of the ratio ωₘ/ω_{1A} (equal to the ratio C_{1A}/Cₘ) is defined during the design stage so as to meet the requirements envisaged for the specific application of the gearbox 20. For example, in the case where the gearbox 20 is intended to be installed on a rotary tiller, the ratio ωₘ/ω_{1A} is preferably defined so that a typical angular speed ωₘ of a shaft connected directly to an engine (without any intermediate reduction gearing, in a configuration which is fairly common for rotary tillers) produces a corresponding typical angular speed ω_{1A} of a shaft connected directly to the tines (without any intermediate reduction gearing, in a configuration fairly common among rotary tillers), when the tines must rotate in a working direction (forwards) at their operating speed.

Figure 1.b shows a gearbox 20 according to the invention in which the control device 50 may assume five working positions indicated by 1R (reverse), N (neutral), (1A slow forwards), N (neutral) and 2A (fast forwards). In accordance with this example, the position 1R (reverse) of the control device 50 corresponds to a transmission configuration which defines a negative transmission ratio, i.e. where the first shaft 41 and the second shaft 42 rotate in the opposite direction to each other. The working positions 1A (slow forwards) and 2A (fast forwards) of the control device 50 correspond to transmission configurations which define positive transmission ratios, i.e. where the first shaft 41 and the second shaft 42 rotate in the same direction. In the specific case, 1A (slow forwards) defines a slow ratio and 2A (fast forwards) defines a fast ratio, i.e. where ωₘ/ω_{1A} is greater than ωₘ/ω_{2A}. Finally, the two working positions N (neutral) of the control device 50 represent the idle condition, namely they both correspond to an open transmission configuration where the two shafts rotate independently of each other.

The gearbox in Figure 1.b therefore allows a choice of two different transmission configurations in which the shafts 41 and 42 rotate in the same direction. With a first configuration it is possible to obtain at the output of the gearbox a torque C_{1A} which is relatively high in view of a low angular speed ω_{1A}, while with the second configuration it is possible to obtain an angular speed ω_{2A} which is relatively high in view of a low torque C_{2A}.

Figure 1.c shows a gearbox 20 according to the invention in which the control device 50 may assume seven working positions indicated by 2R (fast reverse), N (neutral), (1R slow reverse), 1A (slow forwards), N (neutral) and 2A (fast forwards). In accordance with this example, the working positions 1R and 2R of the control device 50 correspond to transmission configurations which define negative transmission ratios, i.e. where the first shaft 41 and the second shaft 42 rotate in the opposite direction to each other. In the specific case, 1R defines a slow ratio and 2R defines a fast ratio. The working positions 1A and 2A of the control device 50 correspond to transmission configurations which define positive transmission ratios, i.e. where the first shaft 41 and the second shaft 42 rotate in the same direction. In the specific case, 1A defines a slow ratio and 2A defines a fast ratio. Finally, the three working positions N of the control device 50 represent the idle condition, namely they correspond to an open transmission configuration where the two shafts rotate independently of each other.

In the examples shown, the active working positions (1A, 2A, 1R and 2R), i.e. those which define configurations for actual transmission between the first shaft 41 and the second shaft 42, are separated by neutral working positions (N). This solution is particularly advantageous, being suitable in particular for gearboxes 20 which are intended for small working machines. This solution in fact prevents the possibility that, when passing suddenly from one transmission ratio to another, damage to the transmission components may occur.

In accordance with other embodiments, not shown, different choices are instead available: for example it is possible to have only one neutral position N between the slower positive ratio 1A and the slower negative ratio 1R. In this configuration, the gearbox 20 according to the invention may define a greater number of active working positions.

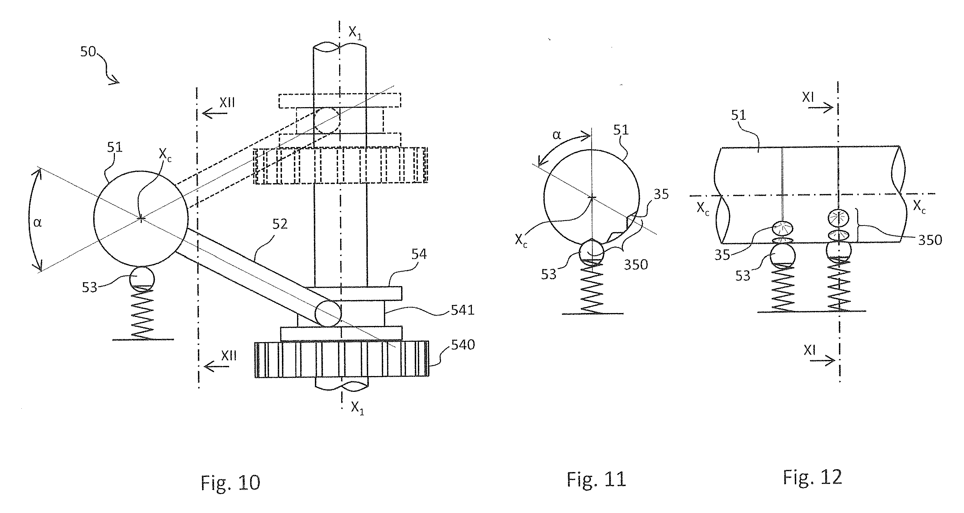

Figure 10 shows in schematic form the control device 50 and its mechanism inside the housing 30. The mechanism comprises the control shaft 51, the fork member 52 and the sliding wheel 54 along the first shaft 51. As can be seen in the figures, the engagement between the fork member 52 and the groove 541 of the sliding wheel 54 defines a working angle α within which the kinematic characteristics allow correct operation of the control device 50. In particular, within the working angle α, a rotation of the control shaft 51 and of the fork member 52 produces a corresponding significant displacement of the sliding wheel 54. On the other hand, outside of the working angle α, the rotation of the control shaft 51 and the fork member 52 produces increasingly smaller displacements of the sliding wheel 54. Moreover, outside of the working angle α, the co-operation between the fork member 52 and the groove 541. The useful angular movement of the shaft 51 is therefore limited to the working angle α, within which all the working positions of the control device 50 must be located.

As already mentioned above, the gearbox 20 according to the invention comprises at least two poppet balls 53 mounted so as to be pushed radially against the control shaft 51 and able to engage in succession inside a plurality of radial recesses 35 formed in the control shaft 51 and spaced circumferentially from each other. Co-operation of the poppet balls 53 with each of the recesses 35 defines a stable equilibrium position for the control shaft 51. In a manner known per se, the at least two poppet balls 53 are preferably mounted on a spring, for example a cylindrical-helix spring, so as to be constantly pushed in the radial direction against the control shaft 51. These technical features can be clearly seen in the cross-section of Figure 11.

As can be noted, the radial recesses 35 have their own circumferential dimension and must also be spaced from each other so that the thrust of the poppet ball 53 defines for the control shaft 51 a condition of indifferent equilibrium between two adjacent recesses. For these reasons, the working angle α of the control device 50 may contain a limited number of stable equilibrium conditions for the control shaft 51. In the diagram according to Figure 11 these working positions are three in number.

Obviously, this limitation may in some cases be excessive. In the examples of embodiment of the gearbox 20 which have been described above with reference to Figures 1, only the simpler type shown in Figure 1.a could be correctly produced with a single poppet ball 53, while the more complex types, which require five and seven working positions of the control device 50, respectively, would require an excessively large working angle (made impossible by the mechanism itself of the control device 50, as described above) or would require radial recesses 35 which are too small and/or too close together in order to be able to ensure suitable operation.

The characteristic features of the invention are such that it is possible to obtain gearboxes 20 with a number of working positions of the control device 50 much greater than those included within the working angle α. As can be seen in the diagram according to Figure 12, the gearbox 20 according to the invention uses two or more poppet balls 53, each operating on an associated series 350 of radial recesses 35. The various series 350 of radial recesses 35 are axially spaced from each other along the axis X_{c} and thus allow the overall definition of a number of stable equilibrium positions for the control shaft 51 much greater than that contained within the working angle α. In a first approximation it is possible to consider that the number of total stable equilibrium positions is equal to the number of stable equilibrium positions contained within the working angle α multiplied by the number of poppet balls 53. The working positions of the control shaft 51 are therefore much closer together than the minimum space permitted by a single series 350 of radial recesses 35 as described above.

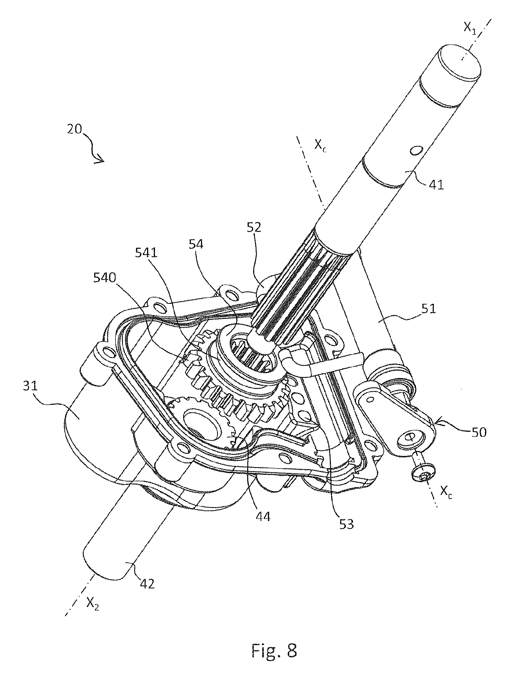

In the embodiment of the gearbox 20 shown in Figure 8 the seats of as many as three poppet balls 53 can be seen.

As the person skilled in the art can easily understand, as a result of the abovementioned characteristic feature of being able to add working positions of the control device 50, it is possible to obtain different types of gearboxes which all form part of the same family *F.* In particular, in accordance with the embodiments shown in the accompanying figures, the various gearboxes of a same family *F* according to the invention have in common the case 31 and, potentially, all the components of the control device 50 such as the control shaft 51, the fork member 52, the sliding wheel 54 and the poppet balls 53.

The internal components of the various gearboxes in the family *F* must be different in order to be able to obtain in each of them a different number of transmission configurations. Obviously, the gearboxes with more gear ratios comprise a greater number of internal gearwheels 44 keyed onto the shafts 41, 42 and/or 43. The greater number of said gearwheels may in each case be housed owing to the different form of the cover 32.

Moreover, in accordance with some embodiments, in the gearbox 20 according to the invention:
- the closure between the case 31 and the cover 32 of the housing 30 is tight sealed;
- the first shaft 41, the second shaft 42 and the control shaft 51 comprise oil seals at the points where they emerge from the housing 30; and
- the case 31 is able to contain, together with part of the shafts 41, 42, 43, the gearwheels 44 and the control device 50, the quantity of lubricating oil which, depending on the design, is necessary for the entire working life of the gearbox 20.

Moreover, in accordance with certain embodiments, most of the components of the gearbox 20 are contained within the case 31. This allows mounting of the gearbox almost entirely inside the case 31, filling of the latter with lubricating oil and closure of the housing 30 in a sealed manner by means of the cover 32. In this way, the gearbox 20 according to the invention may last the whole of its working life without the need for any routine maintenance.

The abovementioned possibility for the housing 30 to be closed in a sealed manner during production and for it to remain closed for the whole of its working life results in a further advantage compared to the gearboxes of the known type. The sequential gearbox 20 according to the invention may in fact be mounted, for the same performance features, with any spatial orientation. Typically this allows, in connection with small working machines, use of the gearbox 20 according to the invention in combination both with vertical-shaft engines and, likewise, with horizontal-shaft engines. The gearboxes of the known type, instead, owing to their structure, are designed to be mounted on the machine with a well-defined spatial orientation, otherwise there is the risk of leakage of the lubricating oil and consequent malfunction or seizing of the gearbox itself.

In the light of what described above, the person skilled in the art can appreciate how, as a result of the invention described above, it is possible to obtain a sequential gearbox 20 and a family *F* of sequential gearboxes which achieve the predefined objects and aims. In particular the sequential gearbox 20 according to the invention is compact and efficient and does not require routine maintenance operations during the course of its working life.

Moreover, the family *F* of sequential gearboxes according to the invention is such that a large number of components, production steps and spare parts may be shared by the various gearbox types.

With regard to the above-described embodiments of the sequential gearbox 20 and the family *F*, the person skilled in the art may, in order to satisfy specific requirements, make modifications to and/or replace elements described with equivalent elements, without thereby departing from the scope of the accompanying claims.

## Claims

1. Sequential gearbox (20) comprising:
- a housing (30) comprising a case (31) and a cover (32);
- a first shaft (41) rotatable about an axis X₁ and projecting from the housing (30);
- a second shaft (42) rotatable about an axis X₂ parallel to the axis X₁, the second shaft projecting from the housing (30);
- at least one lay shaft (43) rotatable about an axis Xᵣ parallel to the axis X₁ and the axis X₂, the at least one lay shaft 43 being entirely contained within the housing (30);
wherein one or more gearwheels (44) are keyed onto each of said shafts (41, 42, 43); wherein one of the first and second shafts (41, 42) is designed to be connected mechanically to an engine upstream of the gearbox (20), while the other shaft (42, 41) is designed to be connected mechanically to a user appliance downstream of the gearbox (20); and
wherein the first shaft (41) and the second shaft (42) may be connected mechanically together, by means of the gearwheels (44) and the at least one lay shaft (43), in a plurality of transmission configurations, wherein each of the transmission configurations defines a different transmission ratio between the first shaft (41) and the second shaft (42);
- a control device (50) which is movable among a plurality of consecutive working positions, wherein each of the working positions of the control device defines a different configuration for transmission between the first shaft (41) and the second shaft (42), the control device comprising:
- a control shaft (51) projecting from the housing (30) and rotatable about an axis X_{c} skew with respect to the axes X₁ and X₂ and perpendicular thereto, the control shaft (51) being able to assume a plurality of successive angular positions corresponding to the working positions of the control device (50);
- a fork member (52) inserted in the control shaft (51) so as to project radially from the axis X_{c} and to be constrained in the circumferential direction relative to the axis X_{c}; and
- a sliding wheel (54) mounted on the first shaft (41) so as to be constrained in the circumferential and radial direction relative to the axis X₁ and be able to slide in an axial direction along the axis X₁ so as to assume a plurality of working positions, the sliding wheel (54) comprising a set of teeth (540) and a groove (541);
wherein the fork member (52) engages with the groove (541) of the sliding wheel (54) so that each angular position of the control shaft (51) produces a corresponding different position of the sliding wheel (54) along the first shaft (51);
**characterised in that**
said gearbox (20) comprises at least two poppet balls (53) mounted so as to be pushed radially against the control shaft (51) and able to engage in succession inside a plurality of radial recesses (35) formed in the control shaft (51) and spaced circumferentially from each other, the co-operation of the poppet balls (53) with each of the recesses (35) defining a stable equilibrium position for the control shaft (51), and
it comprises two or more poppet balls (53), each acting on an associated series (350) of radial recesses (35), the series (350) of radial recesses (35) being spaced axially from each other along the axis X_{c}.

2. Gearbox (20) according to Claim 1, wherein the control shaft (51) projects from the housing (30) at the joint between the case (31) and the cover (32).

3. Gearbox (20) according to Claim 1 or 2, wherein the active working positions (1A, 2A, 1R, 2R) which define configurations for actual transmission between the first shaft (41) and the second shaft (42) are separated by neutral working positions (N) resulting in the two shafts (41, 42) rotating independently of each other.

4. Gearbox (20) according to any one of Claims 1 to 3, wherein the engagement between the fork member (52) and the groove (541) of the sliding wheel (54) defines a working angle α within which a rotation of the control shaft (51) and the fork member (52) produces a corresponding significant displacement of the sliding wheel (54) along the axis X₁, and within which all the working positions (1A, 2A, 1R, N) of the control device (50) must be accommodated.

5. Gearbox (20) according to any one of the preceding claims, wherein:
- the closure between the case (31) and the cover (32) of the housing (30) is tight sealed;
- the first shaft (41), the second shaft (42) and the control shaft (51) comprise oil seals at the points where they emerge from the housing (30); and
- the case (31) is able to contain, together with part of the shafts (41, 42, 43), the gearwheels (44) and the control device (50), the quantity of lubricating oil which, depending on the design, is necessary for the entire working life of the gearbox (20).

6. Family (*F*) comprising a plurality of types of sequential gearboxes (20), each of which in accordance with any one of the preceding claims, wherein:
- each of the gearbox types (20) of the family (*F*) allows the definition of a different set *I* of transmission configurations between the first shaft (41) and the second shaft (42), each of the transmission configurations defining a different transmission ratio; and
- all the gearboxes (20) of the family (*F*) comprise the same case (31).

7. Family (*F*) according to Claim 6, wherein all the gearbox types (20) have in common the control shaft (51), the fork member (52), the sliding wheel (54) and the poppet balls (53).

8. Family (F) according to Claims 6 or 7, wherein each single gearbox type (20) differs from the other types in terms of the set *I* of transmission configurations.

9. Family (*F*) according to any one of Claims 6 to 8, wherein each single gearbox type (20) differs from the other types in terms of a different cover (32).

## Patentansprüche

1. Sequentielles Getriebe (20), welches umfasst:
- ein Gehäuse (30) mit einer Umhüllung (31) und einer Abdeckung (32);
- eine erste Welle (41), die um eine Achse X₁ drehbar ist und aus dem Gehäuse (30) vorsteht;
- eine zweite Welle (42), die um eine Achse X₂ parallel zur Achse X₁ drehbar ist, worin die zweite Welle aus dem Gehäuse (30) vorsteht;
- mindestens eine Vorgelegewelle (43), die um eine Achse Xᵣ parallel zur Achse X₁ und der Achse X₂ drehbar ist, worin die mindestens eine Vorgelegewelle 43 vollständig im Gehäuse (30) enthalten ist;
worin ein oder mehrere Getrieberäder (44) auf jeder der Wellen (41, 42, 43) aufgekeilt sind;
worin eine der ersten oder zweiten Welle (41, 42) ausgestaltet ist, mechanisch mit einem stromaufwärts des Getriebes (20) angeordneten Motor verbunden zu werden, während die andere Welle (42, 41) ausgestaltet ist, mechanisch mit einem Gerät eines Nutzers stromabwärts des Getriebes (20) verbunden zu werden; und
worin die erste Welle (41) und die zweite Welle (42) mittels der Getrieberäder (44) und der mindestens einen Vorgelegewelle (43) in mehreren Übersetzungskonfigurationen mechanisch miteinander verbunden werden können, worin jede der Übersetzungskonfigurationen ein unterschiedliches Übersetzungsverhältnis zwischen der ersten Welle (41) und der zweite Welle (42) definiert;
- eine Steuereinrichtung (50), die unter mehreren aufeinanderfolgenden Arbeitspositionen bewegbar ist, worin jede der Arbeitspositionen der Steuereinrichtung eine unterschiedliche Konfiguration für eine Übersetzung zwischen der ersten Welle (41) und der zweiten Welle (42) definiert, worin die Steuereinrichtung umfasst:
- eine Steuerwelle (51), die aus dem Gehäuse (30) vorsteht und um eine Achse X_{c} in Bezug zu den Achsen X₁ und X₂ schräg drehbar ist und senkrecht dazu, worin die Steuerwelle (51) mehrere aufeinanderfolgende Winkelpositionen einnehmen kann, die den Arbeitspositionen der Steuereinrichtung (50) entsprechen;
- ein Gabelelement (52), das in die Steuerwelle (51) inseriert ist, um so radial von der Achse X_{c} vorzustehen und in Umfangsrichtung relativ zur Achse X_{c} beschränkt zu sein; und
- ein Schieberad (54), das auf der ersten Welle (41) befestigt ist, um in der Umfangs- und Radial-Richtung relativ zu der Achse X₁ beschränkt und in der Lage zu sein, in einer axialen Richtung entlang der Achse X₁ zu rutschen, um so mehrere Arbeitspositionen einzunehmen, worin das Schieberad (54) einen Satz Zähne (540) umfasst und eine Vertiefung (541);
worin das Gabelelement (52) mit der Vertiefung (541) des Rutschrades (54) in Eingriff kommt, so dass jede Winkelposition der Steuerwelle (51) eine entsprechende unterschiedliche Position des Schieberads (54) entlang der ersten Welle (51) erzeugt;
**dadurch gekennzeichnet, dass**
das Getriebe (20) mindestens zwei Lagerkugeln (53) umfasst, die befestigt sind, um radial gegen die Steuerwelle (51) gedrückt zu werden und in der Lage sind, nacheinander in mehrere radiale Vertiefungen (35), die in der Steuerwelle (51) ausgebildet und im Umfang voneinander beabstandet sind, in Eingriff zu kommen, worin das Zusammenspiel der Lagerkugeln (53) mit jeder der Vertiefungen (35) eine stabile Gleichgewichtsposition für die Steuerwelle (51) definiert,
und worin diese zwei oder mehrere Lagerkugeln (53) umfasst, die jeweils auf eine assoziierte Reihe (350) radialer Vertiefungen (35) wirken, worin die Reihe (350) radialer Vertiefungen (35) axial voneinander entlang der Achse X_{c} beabstandet sind.

2. Getriebe (20) nach Anspruch 1, worin die Steuerwelle (51) aus dem Gehäuse (30) an der Verbindung zwischen der Umfüllung (31) und der Abdeckung (32) vorsteht.

3. Getriebe (20) nach Anspruch 1 oder 2, worin die aktiven Arbeitspositionen (1A, 2A, 1R, 2R), die die Konfigurationen für die tatsächliche Übersetzung zwischen der ersten Welle (41) und der zweiten Welle (42) definieren, durch neutrale Arbeitspositionen (N) getrennt sind, was dazu führt, dass die zwei Wellen (41, 42) sich unabhängig voneinander drehen.

4. Getriebe (20) nach einem der Ansprüche 1 bis 3, worin der Eingriff zwischen dem Gabelelement (52) und der Vertiefung (541) des Schieberads (54) einen Arbeitswinkel α definiert, innehalb dessen eine Rotation der Steuerwelle (51) und des Gabelelements (52) eine entsprechend wesentliche Versetzung des Schieberads (54) entlang der Achse X₁ erzeugt, und innehalb dessen alle Arbeitspositionen (1A, 2A, 1R, N) der Steuereinrichtung (50) aufgenommen werden müssen.

5. Getriebe (20) nach einem der vorstehenden Ansprüche, worin:
- der Verschluss zwischen dem Umhüllung (31) und der Abdeckung (32) des Gehäuses (30) dicht verschlossen ist;
- die erste Welle (41), die zweite Welle (42) und die Steuerwelle (51) Öldichtungen an Punkten umfassen, an denen sie aus dem Gehäuse (30) heraustreten; und
- die Umhüllung (31) zusammen mit einem Teil der Wellen (41, 42, 43), den Getrieberädern (44) und der Steuereinrichtung (50), die Menge an Schmieröl enthalten kann, die abhängig vom Aufbau für die gesamte Lebensdauer der Getriebe (20) notwendig ist.

6. Familie *(F)*, welche mehrere Typen sequentieller Getriebe (20) umfasst, von denen jedes gemäß einer der vorstehenden Ansprüche ist, worin:
- jedes der Getriebe-Typen (20) der Familie *(F)* die Definition eines unterschiedlichen Satzes *I* von Übersetzungskonfigurationen zwischen der ersten Welle (41) und der zweiten Welle (42) erlaubt, worin jede der Übersetzungskonfigurationen ein unterschiedliches Übersetzungsverhältnis definiert; und
- worin jedes Getriebe (20) der Familie *(F)* die gleiche Umhüllung (31) umfasst,

7. Familie *(F)* nach Anspruch 6, worin jeder Getriebe-Typ (20) eine gemeinsame Steuerwelle (51), Gabelelement (52). Rutschrad (54) und Lagerkugel (53) aufweist,

8. Familie (F) nach Anspruch 6 oder 7, worin jeder einzelne Getriebe-Typ (20) von anderen Typen hinsichtlich des Satzes *I* an Übersetzungskonfigurationen verschieden ist.

9. Familie *(F)* nach einem der Ansprüche 6 bis 8, worin jeder einzelne Getriebe-Typ (20) von den anderen Typen hinsichtlich einer unterschiedlichen Abdeckung (32) verschieden ist.

## Revendications

1. Boîte de vitesses séquentielle (20) comprenant :
un logement (30) comprenant un boîtier (31) et un couvercle (32) ;
un premier arbre (41) pouvant tourner autour d'un axe X₁ et faisant saillie du logement (30) ;
un second arbre (42) pouvant tourner autour d'un axe X₂ parallèle à l'axe X₁, le second arbre faisant saillie du logement (30) ;
au moins un arbre intermédiaire (43) pouvant tourner autour d'un axe Xᵣ parallèle à l'axe X₁ et à l'axe X₂, le au moins un arbre intermédiaire (43) étant entièrement contenu à l'intérieur du logement (30) ;
dans laquelle une ou plusieurs roues dentées (44) sont clavetées sur chacun desdits arbres (41, 42, 43) ;
dans laquelle l'un des premier et second arbres (41, 42) est conçu pour être raccordé mécaniquement à un moteur en amont de la boîte de vitesses (20), alors que l'autre arbre (42, 41) est conçu pour être mécaniquement raccordé à un appareil d'utilisateur en aval de la boîte de vitesses (20) ; et
dans laquelle le premier arbre (41) et le second arbre (42) peuvent être raccordés mécaniquement ensemble, au moyen des roues dentées (44) et du au moins un arbre intermédiaire (43), dans une pluralité de configurations de transmission, dans laquelle chacune des configurations de transmission définit un rapport de transmission différent entre le premier arbre (41) et le second arbre (42) ;
un dispositif de commande (50) qui est mobile parmi une pluralité de postions de travail consécutives, dans laquelle chacune des positions de travail du dispositif de commande définit une configuration différente pour la transmission entre le premier arbre (41) et le second arbre (42), le dispositif de commande comprenant :
un arbre de commande (51) faisant saillie du logement (30) et pouvant tourner autour d'un axe X_{c} oblique par rapport aux axes X₁ et X₂ et perpendiculaire à ces derniers, l'arbre de commande (51) pouvant adopter une pluralité de positions angulaires successives correspondant aux positions de travail du dispositif de commande (50) ;
un élément de fourche (52) inséré dans l'arbre de commande (51) afin de faire radialement saillie de l'axe X_{c} et d'être contraint dans la direction circonférentielle par rapport à l'axe X_{c} ; et
une roue coulissante (54) montée sur le premier arbre (41) afin d'être contrainte dans la direction circonférentielle et radiale par rapport à l'axe X₁ et pouvoir coulisser dans une direction axiale le long de l'axe X₁ afin d'adopter une pluralité de positions de travail, la roue coulissante (54) comprenant un ensemble de dents (540) et une rainure (541) ;
dans laquelle l'élément de fourche (52) se met en prise avec la rainure (541) de la roue coulissante (54) de sorte que chaque position angulaire de l'arbre de commande (51) produit une position différente correspondante de la roue coulissante (54) le long du premier arbre (51) ;
**caractérisée en ce que** :
ladite boîte de vitesses (20) comprend au moins deux billes à champignon (53) montées afin d'être poussées radialement contre l'arbre de commande (51) et pouvant se mettre en prise, en succession, à l'intérieur d'une pluralité d'évidements radiaux (35) formés dans l'arbre de commande (51) et espacées de manière circonférentielle l'une de l'autre, la coopération des billes à champignon (53) avec chacun des évidements (35) définissant une position d'équilibre stable pour l'arbre de commande (51),
et elle comprend deux ou plusieurs billes à champignon (53), chacune agissant sur une série (350) associée d'évidements radiaux (35), les séries (350) d'évidements radiaux (35) étant espacées axialement les unes des autres le long de l'axe X_{c}.

2. Boîte de vitesses (20) selon la revendication 1, dans laquelle l'arbre de commande (51) fait saillie du logement (30) au niveau du joint entre le boîtier (31) et le couvercle (32).

3. Boîte de vitesses (20) selon la revendication 1 ou 2, dans laquelle les positions de travail actives (1A, 2A, 1R, 2R) qui définissent des configurations pour la transmission réelle entre le premier arbre (41) et le second arbre (42) sont séparées par des positions de travail neutres (N) se traduisant par les deux arbres (41, 42) qui tournent indépendamment l'un de l'autre.

4. Boîte de vitesses (20) selon l'une quelconque des revendications 1 à 3, dans laquelle la mise en prise entre l'élément de fourche (52) et la rainure (541) de la roue coulissante (54) définit un angle de travail α dans les limites duquel une rotation de l'arbre de commande (51) et de l'élément de fourche (52) produit un déplacement significatif correspondant de la roue coulissante (54) le long de l'axe X₁ et à l'intérieur duquel toutes les positions de travail (1A, 2A, 1R, N) du dispositif de commande (50) doivent être acceptées.

5. Boîte de vitesses (20) selon l'une quelconque des revendications précédentes, dans laquelle :
la fermeture entre le boîtier (31) et le couvercle (32) du logement (30) est étanche ;
le premier arbre (41), le second arbre (42) et l'arbre de commande (51) comprennent des joints d'étanchéité à l'huile aux points où ils sortent du logement (30) ; et
le boîtier (31) peut contenir, conjointement avec la partie des arbres (41, 42, 43), les roues dentées (44) et le dispositif de commande (50), la quantité d'huile de lubrification qui, en fonction de la conception, est nécessaire pour toute la durée de vie de la boîte de vitesses (20).

6. Famille (F) comprenant une pluralité de types de boîtes de vitesses séquentielles (20), dont chacune est selon l'une quelconque des revendications précédentes, dans laquelle :
chacun des types de boîte de vitesses (20) de la famille (F) permet la définition d'un ensemble différent *I* de configurations de transmission entre le premier arbre (41) et le second arbre (42), chacune des configurations de transmission définissant un rapport de transmission différent ; et
toutes les boîtes de vitesses (20) de la famille (F) comprennent le même boîtier (31).

7. Famille (F) selon la revendication 6, dans laquelle tous les types de boîte de vitesses (20) ont en commun l'arbre de commande (51), l'élément de fourche (52), la roue coulissante (54) et les billes à champignon (53).

8. Famille (F) selon la revendication 6 ou 7, dans laquelle chaque type de boîte de vitesses unique (20) est différent des autres types en terme d'ensermble *I* de configurations de transmission.

9. Famille (F) selon l'une quelconque des revendications 6 à 8, dans laquelle chaque type de boîte de vitesses unique (20) diffère des autres types en termes de couvercle différent (32).
